(19) Europäisches Patentamt
European Patent Office
Office européen des brevets

(11) Numéro de publication: **0 071 094**
**A1**

(12) **DEMANDE DE BREVET EUROPEEN**

(21) Numéro de dépôt: **82106333.6**

(22) Date de dépôt: **15.07.82**

(51) Int. Cl.³: **H 01 M 2/08**
H 01 M 2/06

(30) Priorité: **21.07.81 FR 8114151**

(43) Date de publication de la demande:
**09.02.83 Bulletin 83/6**

(84) Etats contractants désignés:
**AT BE CH DE FR GB IT LI LU NL SE**

(71) Demandeur: **GIPELEC Société Anonyme dite :**
**125, rue du Président Wilson**
**F-92302 Levallois-Perret(FR)**

(72) Inventeur: **Chenaux, Bernard**
**Rue du Clos de la Roche**
**F-86000 Poitiers(FR)**

(74) Mandataire: **Weinmiller, Jürgen et al,**
**Zeppelinstrasse 63**
**D-8000 München 80(DE)**

(54) **Traversée étanche de borne négative et générateur électrochimique faisant application de cette traversée.**

(57) Le moyen assurant l'étanchéité entre ladite borne (1) et une paroi métallique (2) comprend un joint de verre (3).

Selon l'invention, au moins au niveau du contact entre la borne (1) et ledit joint de verre (3), la surface de la borne (1) est revêtue d'au moins une couche (4) comprenant au moins un oxyde isolant électriquement.

Applications: générateurs électrochimiques, notamment à électrode négative à base de lithium.

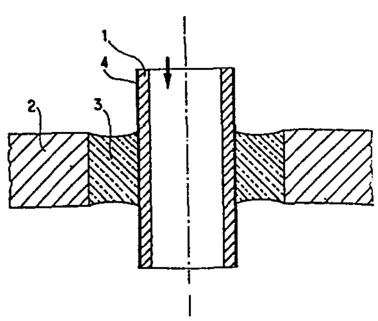


**EP 0 071 094 A1**

Traversée étanche de borne négative et générateur électrochimique faisant application de cette traversée

L'invention concerne une traversée étanche de borne négative dans laquelle le moyen assurant l'étanchéité entre ladite borne et une paroi métallique comprend un joint de verre.

De telles traversées sont présentes notamment dans les générateurs électrochimiques, et en particulier dans ceux à électrode négative à base de lithium, en raison, du fait de l'agressivité des électrolytes utilisés, de l'obligation de réaliser une fermeture parfaitement étanche et d'obtenir la tenue en température du joint d'étanchéité.

Toutefois on a pu observer, dans les piles au lithium, quelle que soit la matière positive associée au lithium (oxyde de cuivre, chromate d'argent, chlorure de thionyle...) qu'au cours de la décharge il se produisait une dégradation du verre constituant le joint de verre de la traversée.

Cette dégradation s'effectue selon un processus électrochimique mettant en jeu les oxydes constituant le verre, les cations lithium en solution dans l'électrolyte et les électrons provenant de la dissolution de l'électrode en lithium.

Ce processus peut être traduit sous la forme suivante dans le cas de $SiO_2$ principal constituant du verre :

$$SiO_2 + 4\ Li^+ + 4\ e^- \rightarrow 2\ Li_2O + Si$$

étant entendu que ce type de réaction peut être étendu à tous les autres constituants du verre, avec des cinétiques différentes.

On a déjà proposé de ralentir ou de stopper la dégradation du verre en modifiant la composition des verres traditionnels ou en isolant le verre de l'électrolyte par un dépôt de résines macromoléculaires ou d'oxydes métalliques, stables dans les conditions de fonctionnement de la pile.

Toutefois il s'agit là de solutions onéreuses et peu fiables.

La présente invention permet de remédier à ces inconvénients.

Elle a pour objet une traversée étanche de borne négative dans laquelle le moyen assurant l'étanchéité entre ladite borne et une paroi

métallique comprend un joint de verre, caractérisée par le fait qu'au moins au niveau du contact entre la borne et ledit joint de verre, la surface de la borne est revêtue d'au moins une couche comprenant au moins un oxyde isolant électriquement.

Dans le cas d'une pile au lithium par exemple, la présence du revêtement sur la borne négative, conformément à l'invention, a pour effet de ralentir et même de stopper la réaction de corrosion en freinant l'arrivée des électrons issus de ladite borne reliée à l'anode de lithium, et qui sont nécessaires à l'accomplissement de cette réaction.

La couche d'oxyde isolant, ainsi interposée entre la borne négative et le joint de verre, doit être évidemment stable dans les conditions d'utilisation des piles et parfaitement adhérente à la borne, sa résistivité étant élevée pour freiner au maximum le transfert des électrons.

L'invention a bien entendu également pour objet les générateurs électrochimiques comportant de telles traversées étanches de borne négative.

A titre illustratif et nullement limitatif, parmi les oxydes utilisables, on peut citer les oxydes d'aluminium, niobium, calcium, magnésium, baryum, strontium, zirconium, beryllium, titane, silicium, sodium, potassium, bore, le matériau constitutif de la borne pouvant comprendre au moins un corps métallique choisi parmi l'acier inox, les alliages fer-nickel, fer-chrome, le titane, le tantale et leurs alliages.

L'invention sera mieux comprise en se reportant à la description ci-après et au dessin annexé portant sur un mode d'exécution d'une traversée étanche de borne négative dans une pile au lithium.

La figure unique est une coupe partielle schématique agrandie au niveau de la traversée.

La borne négative de la pile est formée par un pion tubulaire métallique 1 traversant une coupelle métallique 2 elle-même reliée à la polarité positive.

Le pion 1 est isolé de la paroi de la coupelle 2 par un joint de verre 3.

Conformément à l'invention, le pion 1 porte sur sa face extérieure une couche 4 d'un oxyde isolant, dont l'épaisseur peut varier entre quelques microns et quelques dixièmes de millimètres.

Le pion 1 peut être en acier inox, en alliages fer nickel ou fer-chrome, en titane ou en tantale, par exemple.

La couche d'oxyde isolant peut être à base d'alumine, déposée sur le pion par projection au moyen d'un chalumeau à plasma.

La couche ainsi déposée peut être traitée dans le but de réduire sa porosité. Ainsi dans le cas d'un dépôt d'alumine on peut lui faire subir un frittage à une température allant de 1500° à 1800°C. Bien entendu dans ce cas le matériau constitutif du pion doit être apte à subir un tel traitement ; on peut à cet effet utiliser par exemple un pion en tantale.

On peut aussi, par exemple dans le cas d'un pion en titane, revêtir celui-ci d'une couche isolante, en oxyde de titane, par oxydation anodique.

Une fois que le pion a été revêtu par la couche d'oxyde isolant, la traversée étanche est réalisée selon le processus classique des scellements en compression, c'est-à-dire que l'ensemble de la traversée (coupelle, joint de verre, pion central muni de la couche isolante) est porté à haute température pour la fusion du verre. Après refroidissement la couche d'oxyde isolant est emprisonnée entre le verre et le pion central empêchant ainsi le transfert des électrons provenant de l'électrode de lithium vers le verre.

On a comparé des piles lithium-chromate d'argent à électrolyte comprenant une solution de perchlorate de lithium dans du carbonate de propylène, équipées d'une traversée de borne négative conforme à l'invention à des piles semblables mais dont la borne négative n'était pas revêtue au niveau du joint de verre de la couche d'oxyde isolant.

Au bout de deux mois, on a constaté une destruction totale du verre dans les piles ne comportant pas la couche d'oxyde isolant alors que dans les piles conformes à l'invention le verre était intact et la traversée totalement étanche.

Bien entendu l'invention n'est nullement limitée au mode de réalisation décrit et représenté qui n'a été donné qu'à titre d'exemple. Si, pour des raisons de montage technologique, la position des électrodes est inversée, la couche protectrice devra être déposée entre le verre 3 et la coupelle extérieure 2. C'est toujours la pièce métallique reliée à l'anode de lithium qui doit recevoir le dépôt protecteur.

REVENDICATIONS

1/ Traversée étanche de borne négative (1) dans laquelle le moyen assurant l'étanchéité entre ladite borne (1) et une paroi métallique (2) comprend un joint de verre (3), caractérisée par le fait qu'au moins au niveau du contact entre la borne (1) et ledit joint de verre (3), la surface de la borne (1) est revêtue d'au moins une couche (4) comprenant au moins un oxyde isolant électriquement.

2/ Traversée selon la revendication 1, caractérisée par le fait que l'épaisseur de ladite couche (4) est comprise entre quelques microns et quelques dizièmes de millimètres.

3/ Traversée selon l'une des revendications précédentes, caractérisée par le fait que le matériau constitutif de ladite borne (1) comprend au moins un corps métallique choisi dans le groupe formé par l'acier inox, les alliages fer-nickel, fer-chrome, le titane, le tantale, et leurs alliages.

4/ Traversée selon l'une des revendications précédentes, caractérisée par le fait que ledit oxyde isolant est choisi dans le groupe formé par les oxydes d'aluminium, niobium, calcium, magnésium, baryum, strontium, zirconium, béryllium, titane, silicium, sodium, potassium, bore.

5/ Générateur électrochimique, en particulier à électrode négative à base de lithium, comportant une traversée étanche de borne négative selon l'une des revendications, ledit oxyde isolant électriquement étant chimiquement stable dans le milieu électrolytique dudit générateur.

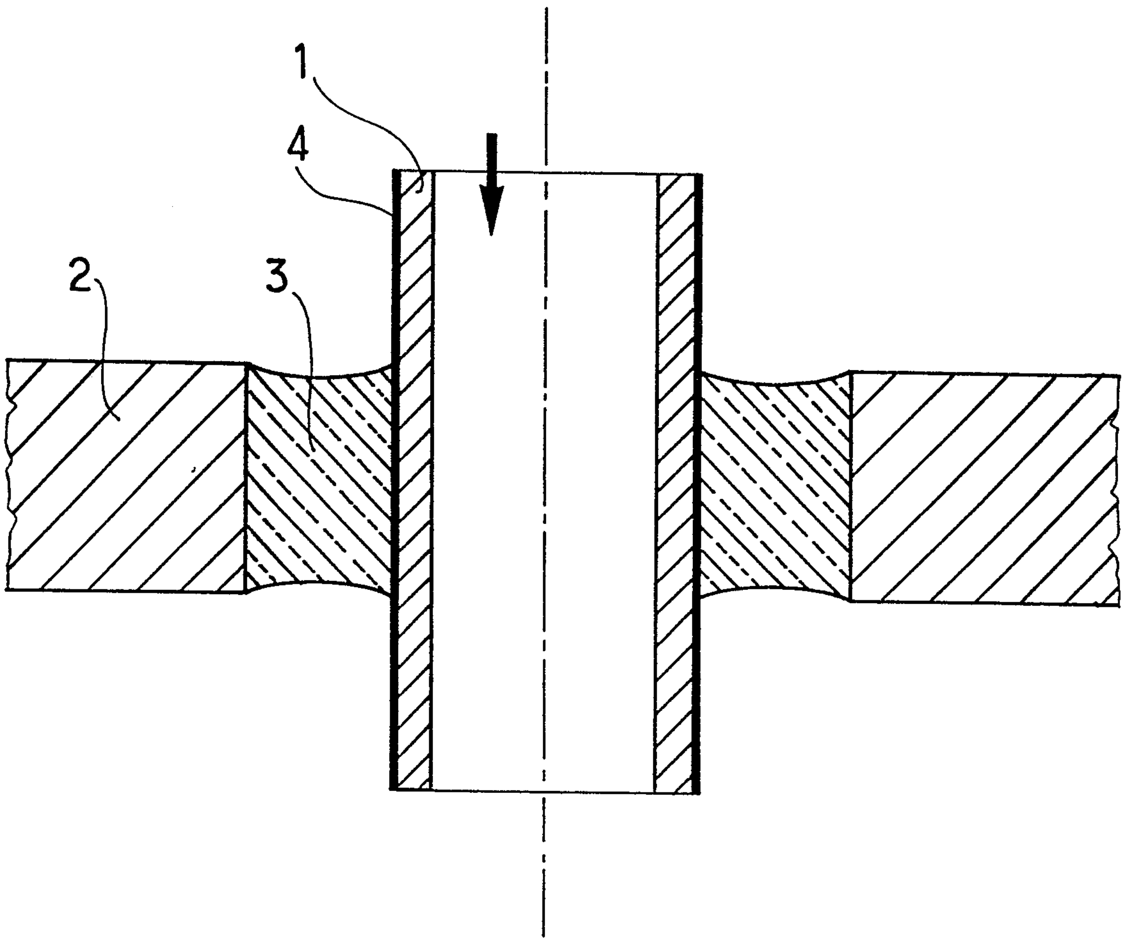
1
4
2
3

0071094

Office européen des brevets

# RAPPORT DE RECHERCHE EUROPEENNE

Numéro de la demande

EP 82 10 6333

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X,Y | FR-A-2 423 062 (P.R. MALLORY) * revendications 1,2,3,4,8; figure; page 2, lignes 22-30; page 3, lignes 4-10; page 6, lignes 6-32; page 7, lignes 22-33 * | 1-5 | H 01 M 2/08<br>H 01 M 2/06 |
| A | US-A-3 600 017 (J.D. SCHERER) * revendications 1,2; colonne 1, lignes 11-14; colonne 4, lignes 22-24; colonne 3, lignes 1-3 * | 1 | |
| Y | US-A-3 275 901 (R.G. MERRIT et R.M. TREWHELLA) * revendication 1; colonne 2, lignes 27-35; colonne 4, lignes 35-56; colonne 3, lignes 14-27 * | 1,4 | |
| A | FR-A-2 380 642 (FUJI ELECTRO CHEMICAL) * page 3, lignes 9-27; page 1, ligne 28 - page 2, ligne 8 * | | DOMAINES TECHNIQUES RECHERCHES (Int. Cl. 3)<br>H 01 M 2/08<br>H 01 M 2/06 |
| A | FR-A-2 461 363 (DURACELL INT. INC.) * revendications 1,2,10,11 * | | |

Le présent rapport de recherche a été établi pour toutes les revendications

| Lieu de la recherche | Date d achèvement de la recherche | Examinateur |
|---|---|---|
| LA HAYE | 28-10-1982 | D'HONDT J.W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention
E : document de brevet antérieur, mais publié à la date de dépôt ou après cette date
D : cité dans la demande
L : cité pour d'autres raisons
& : membre de la même famille, document correspondant